Europäisches Patentamt

(19) European Patent Office

Office européen des brevets

(11) Publication number: **0 101 855**
**A1**

(12) # EUROPEAN PATENT APPLICATION

(21) Application number: **83106842.4**

(22) Date of filing: **12.07.83**

(51) Int. Cl.³: **E 21 B 43/267**
**C 04 B 35/18**

(30) Priority: **23.07.82 US 401299**
**07.02.83 US 464252**

(43) Date of publication of application:
**07.03.84 Bulletin 84/10**

(84) Designated Contracting States:
**BE DE FR GB IT NL**

(71) Applicant: **NORTON COMPANY**
**1 New Bond Street**
**Worcester Massachusetts 01606(US)**

(72) Inventor: **Patchett, Joseph E.**
**7138 Oxford Street**
**Niagara Falls Ontario, L2J 1J5(CA)**

(72) Inventor: **Rowse, Robert A.**
**33 North Street**
**Shrewsbury Massachusetts(US)**

(74) Representative: **Baillie, Iain Cameron et al,**
**c/o Ladas & Parry Isartorplatz 5**
**D-8000 München 2(DE)**

(54) **Low density proppant for oil and gas wells.**

(57) A low density generally spherical sintered ceramic proppant containing chemically combined aluminum and silicon for use in oil and gas wells characterized by having a chemically combined aluminum content, calculated as aluminum oxide, of from 60 to 85% by weight, a density of less than 3.4 grams per cubic centimeter and a permeability of 10,000 psi of at least 30% of its permeability at 1,000 psi and a method for making same.

EP 0 101 855 A1

This invention relates to a low density propping medium for propping fractures in oil or in gas wells.

Since the late 1940's when hydraulic fracturing of the formations adjacent oil wells was first practiced, it has been found necessary to inject solid granular propping agents into such formations to prevent closure of the fractures. Sand (flint) was apparently the first such solid propping agent to be employed. U.S. Patent 2,950,247 suggests the use of aluminum oxide spheres as propping agents. U.S. Patent 3,890,072, suggests the use of sintered bauxite spheres as an oil well proppant. U.S. Patent 4,068,718, teaches the use of sintered bauxite particles made according to the teaching of U.S. Patent 3,079,243 or 3,421,492 for oil well propping. U.S. Patent 3,967,138 suggests "alumina" proppants of a wide range of density and alumina content but contains no teaching of how the pellets are made and shows test results only for material having a density of 3.4 or greater.

An improved method for producing sintered bauxite proppant material in spherical form is taught in Australian Patent 521,930 published April 5, 1982. Canadian Patent 117,897 also teaches manufacture of sintered bauxite proppant having a density of greater than 3.57 g/cc and suggests the addition of as much as 30% of clay or other additives to the bauxite prior to forming and firing.

U.S. Patent 4,068,718, referred to above, requires a density of at least 3.4 g/cc in the proppant in order to provide sufficient compressive strength. The compressive strength required in U.S. Patent 4,068,718 is such

-2-

that the proppant does not lose more than 75% of its permeability when the compressive load is increased from 1,000 psi to 10,000 psi, by a standarized permeability test.

In accordance with this invention, there is provided a low density generally spherical sintered ceramic proppant containing chemically combined aluminum and silicon for use in oil and gas wells having a chemically combined aluminum content, calculated as aluminum oxide, of from 60 to 85% by weight.

The proppant has a lower density than prior art bauxitic proppants while retaining sufficient strength to be useful and effective in most proppant applications. The proppant of the present invention has a density of less than 3.4 g/cc and has greater permeability under high compressive stress than all ceramic or glass proppants of the prior art except some of the strongest of the sintered bauxite proppants of density greater than 3.4 g/cc now available, and has a permeability ratio P10,000/P1,000 of at least 0.3. That is, the permeability at 10,000 psi is at least 30% of the permeability at 1,000 psi.

Lower density of the proppant is desirable in providing more volume of proppant per unit weight, that is, more permeability per pound of proppant, and in enhanced handling properties. A light weight proppant is easier to pump into the well and may be carried more readily into the cracks in the formation than a more dense proppant.

The proppant of the present invention employs an additive in the amount of from 40 to 90% on an anhydrous basis, of a material such as the high aluminous clays identified below as a substitute for a portion of the bauxite in the proppant of Australian Patent 521,930. While other sources of minerals may be employed to achieve a composition of the same range of chemical constituents, the association of minerals (i.e. combined alumina and silica in the form of hydrous alumino silicate clay materials) in the high aluminous clays is particularly suitable for making the proppant of the present invention, in producing high strength in spite of the relatively low density as compared to prior art bauxite proppant.

Although other known pelletization methods may be used, in the preferred method the mixture of milled bauxite and milled clay, together with minor amounts of organic or inorganic binder material for green strength is placed in an intensive mixer together with sufficient water for initiating the pelletizing process. After a period of mixing, additional dry mix is added and the pelletizing action is continued until spheres of the desired green size are formed. The pellets are then dried and fired at 1400 to 1500°C. to produce the desired product. Except for the composition of the mix, the method employed is that disclosed in Australian Patent 521,930.

The bauxite should be milled to a particle size such that the mass average diameter is no greater than 10, preferably less than 7 microns. The clay should be milled to a matching particle size. It is preferable to mix the bauxite (calcined abrasive grade) and the clay together, as received from the supplier, and to mill the mixture to the desired particle size.

A clay found useful in this invention although termed "bauxitic" by the supplier, contains essentially all of its alumina in the form of hydrated alumino-silicate clay mineral, not in the form of hydrated alumina. The clay contains 50 to 65% combined aluminum (calculated as $Al_2O_3$) and 28 to 42% combined silicon (calculated as $SiO_2$). The clay contains well under 1% of alkali and alkaline earth elements and the major impurities in the clay are titania and iron, up to 7% total.

Another clay form useful is a higher average alumina, lower silica content clay, having an alumina content (calculated on $Al_2O_3$) of 63 to 67%, an alkali and alkaline earth content of under 1%, and a silica content of 18 to 25% (all on an anhydrous basis).

The finished product consists of substantially spherical ceramic particles having a density of less than 3.4 g/cc, preferably 2.8 to 3.3 g/cc, most preferably 3.0 to 3.2 g/cc, an alumina content of 60 to 85%, preferably 65 to 75%, a silica content of 10 to 30%, preferaboy 18 to 28% and an iron content (calculated as $Fe_2O_3$) of from 3 to 7%. The alumina and silica are present in the form of mullite with minor amounts of alpha alumina and glass, when the lower alumina clay is used, and in the form of mullite and alpha alumina when higher alumina clays are used.

### Examples I and II

An Eirich R7 high intensity mixer (available from Maschinenfabrik Gustav Eirich, Nordbaren, Federal Republic of Germany) was employed using a standard pin type mixing tool. The mix consisted of 35 pounds of a milled mixture of 50% calcined bauxite and 50% high aluminous clay, and 0.6 pounds of cereal starch. These ingredients were mixed dry at high speed for two minutes. Then 13 pounds of water was added with mixing at high speed continuing for two minutes, at which time the mixing was switched to slow speed for about 30 seconds. The 16 pounds of dry powder mix of bauxite and calcined "bauxitic" clay was added at the rate of 2 to 3 pounds per minute. After the addition was completed, mixing was continued for 30 seconds and the thus formed green spherical pellets were dumped from the mixer, dried, and fired at 1480 to 1500°C. for 45 minutes.

One batch (Batch 1B), prepared according to the above procedure in which the clay and bauxite were wet milled for 20 hours in a vibratory mill, and in which the proppant was fired at 1500°C., had a sphere density of 3.17 g/cc, and was at least as resistant to severe acid conditions as conventional sintered bauxite proppant (a test for acid resistance is described in an A.P.I. proposed standard entitled "Recommended Practice for Testing Sand Used in Hydraulic Fracture Operations" of August 1981). The product contained mullite as the major phase with minor amounts of alpha alumina.

Using the same procedures with a batch (#9018) in which the raw materials were milled 5 hours and fired in the 1480 to 1500°C range, resulted in a sphere density of 3.1 g/cc and an acid resistance at least equal to that of sintered bauxite proppant.

Permeability values measured on 25/30 sized material (about 700 microns) were as follows:

| Batch | Applied Stress psi | Permeability (Darcies) | Permeability Ratio 10,000/1,000 |
|-------|--------------------|------------------------|---------------------------------|
| 1B    | 2,000              | 344                    | 235/360 [.65]                   |
|       | 4,000              | 303                    |                                 |
|       | 6,000              | 295                    |                                 |
|       | 8,000              | 272                    |                                 |
|       | 10,000             | 235                    |                                 |
|       | 12,000             | 178                    |                                 |
|       | 15,000             | 97                     |                                 |
| 9018  | 2,000              | 425                    | 230/460 [0.50]                  |
|       | 4,000              | 411                    |                                 |
|       | 6,000              | 391                    |                                 |
|       | 8,000              | 298                    |                                 |
|       | 10,000             | 230                    |                                 |
|       | 12,000             | 179                    |                                 |
|       | 15,000             | 77                     |                                 |

The permeability test is the brine (KC1) test described in the Journal of Petroleum Technology, September 1973, pages 1101-1107, by C. E. Cooke.

Examples III and IV

In a further reduction to practice of the invention a differente source of clay was used, and two different proppant compositions were made according to the procedures of Examples I and II.

In the first example 90% of uncalcined clay was mixed with 10% bauxite, and in the second, 80% uncalcined clay and 20% bauxite was employed. The clay (which actually contained about 30% $H_2O$) analysis, on an anhydrous basis, uses as follows:

Clay of Examples III, IV (on dry basis)

| | |
|---|---|
| $SiO_2$ | 22.49 |
| $Fe_2O_3$ | 7.37 |
| $TiO_2$ | 3.95 |
| CaO | 0.04 |
| MgO | 0.04 |
| $Na_2O$ | 0.03 |
| $Al_2O_3$ (by diff) | 65.7 |

The fired proppant of the 90/10 composition had a crush strength superior to that of Examples I and II.

The fired proppant of the 80/20 composition has a crush strength superior to that of the 90/10 composition, indicating a higher permeability than the 90/10 mix and the proppant of Examples I and II.

Both proppants of Examples III and IV consisted essentially of polycrystalline mullite bodies.

Typical analysis ranges on a calcined basis for the bauxite and for the high aluminous clays used are:

| Components | Bauxite | Aluminous Clay |
|---|---|---|
| $SiO_2$ | 2.8 - 3.5 | 18 - 42 |
| $TiO_2$ | 3.0 - 3.6 | 2.0 - 3.8 |
| $Fe_2O_3$ | 3.5 - 5.5 | 1.8 - 12 |
| CaO | 0.05 - 0.1 | .03 - 0.1 |
| MgO | 0.05 - 0.1 | .03 - 0.1 |
| $Na_2O$ | 0.04 - 0.06 | .01 - .06 |
| $Al_2O_3$ (by Diff) | 85 - 90 | 50 - 67 |
| Loss on Ignition | 1.4 | 1 - 6 |

Powder X-ray diffraction of the clays shows strong peaks for hydrated alumino-silicates and no significant peaks for alpha alumina. In the calcined bauxite the alumina is in the form of alpha alumina or its hydrated alumina precursors.

The broad limits in the finished fired product, not preferred, but considered within the invention are as follows:

| | |
|---|---|
| $Al_2O_3$ | 60 to 85% |
| $SiO_2$ | 10 to 30% |
| $Fe_2O_3$ | 2 to 10% |

Except for $TiO_2$ which may be present up to 3 or 4%, other metal oxides, such as the alkali and alkaline earth elements are present in amounts of less than 1%. Except for its presence in minor glassy phases, essentially all of the silica is in combined form in the mullite phase.

## C L A I M S

1.      A low density generally spherical sintered ceramic proppant containing chemically combined aluminum and silicon for use in oil and gas wells characterized by having a chemically combined aluminum content, calculated as aluminum oxide, of from 60 to 85% by weight, a density of less than 3.4 grams per cubic centimeter and a permeability of 10,000 psi of at least 30% of its permeability at 1,000 psi.

2.      A proppant according to claim 1, characterized by the fact that it has a chemically combined aluminum content of 65 to 75% by weight.

3.      A proppant according to claim 1 or 2, characterized by the fact that it has a chemically combined silicon content, calculated at $SiO_2$, of 10 to 30% by weight.

4.      A proppant according to claim 3, characterized by the fact that it has a chemically combined silicon content of 18 to 28% by weight.

5.      A proppant according to any one of the preceding claims, characterized by the fact that the silicon is contained in glass and mullite phases.

6.      A proppant according to any one of the preceding claims, characterized by having an acid resistance at least equivalent to that of sintered bauxite.

7.      A method of making a low density generally spherical sintered ceramic proppant containing chemically combined aluminum and silicon for use in oil and gas wells which comprises forming a mixture comprising bauxite into pellets, said mixture having an average particle size of less than 10 microns, and firing said pellets, characterized by including in said mixture a high aluminous aluminosilicate clay in an amount sufficient to provide a fired product having a chemically combined aluminum content, calculated as aluminum oxide, of from 60 to 85% by weight.

8.      A method according to claim 7, characterized by the fact that said high aluminous alumino-silicate clay comprises 40 to 90% by weight on an anhydrous basis of said mixture.

CASE 1831-C

9.      A method according to claim 7 or 8, characterized by the fact that said mixture further comprises organic or inorganic binder material.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 280 784 (UNION CARBIDE CORP.) <br> * Claims 1,3-5; page 3, lines 25-36 * | 1-6 | E 21 B 43/26 <br> C 04 B 35/18 |
| Y | US-A-2 672 671 (S.P. ROBINSON) <br> * Claims 1,9,11-22; column 4, lines 20-29, 62-64 * | 1-9 | |
| Y | US-A-2 566 117 (L.D. CHRISTIE) <br> * Claims 1,2; column 5, lines 5-43 * | 1-9 | |
| Y | GB-A- 715 882 (ICI) <br> * Claims 1-20; page 1, lines 42-66; page 2, lines 27-36, 74-78, 111-115 * | 1-9 | |
| A | US-A-3 437 148 (P.J. COLPOYS) <br> * Claims 1-6 * | 1 | |
| D,A | DE-A-2 921 336 (NORTON CO.) <br> * Claims 1-6; page 7, lines 1-21 * | 7,9 | TECHNICAL FIELDS SEARCHED (Int. Cl. ³) <br> E 21 B <br> C 04 B <br> C 09 K |
| E | EP-A-0 087 852 (DRESSER IND.) <br> * claims 1,8,9,12-14 * | 1 | |

The present search report has been drawn up for all claims

| Place of search | Date of completion of the search | Examiner |
|---|---|---|
| THE HAGUE | 01-11-1983 | SCHURMANS H.D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82